# EUROPÄISCHE PATENTANMELDUNG

(11) **EP 2 706 347 A2**
(43) Veröffentlichungstag der Anmeldung: **12.03.2014**
(21) Anmeldenummer: 13183592.8
(22) Anmeldetag: 09.09.2013
(51) Int. Cl.: G01N 21/85

(54) **Messzelle sowie Opazimeter mit Messzelle**

(30) Priorität: 10.09.2012 DE 102012216016
(71) Anmelder: MAHA Maschinenbau Haldenwang GmbH & Co. KG, 87490 Haldenwang (DE)
(72) Erfinder: Knox, Gunther, 87781 Ungerhausen (DE)
(74) Vertreter: MERH-IP Matias Erny Reichl Hoffmann

(57) **Zusammenfassung**

Eine Messzelle (100) weist auf: Eine Trägerstruktur (102), die eine Einrichtung (104) zur Aufnahme einer Lichtquelle und eine Einrichtung (108) zur Aufnahme eines Lichtsensors aufweist; eine Messkammer (112) in die ein zu untersuchendes Fluids einleitbar ist, und die ein Messkammergehäuse (114) aufweist, wobei die Einrichtung zur Aufnahme der Lichtquelle ein erstes Ende (116) des Messkammergehäuses, und die Einrichtung zur Aufnehme des Lichtsensors ein zweites Ende (118) des Messkammergehäuses bilden, derart, dass ein von der Lichtquelle in die Messkammer ausgesandter Lichtstrahl (120) auf den Lichtsensor trifft; und eine an oder in der Trägerstruktur vorgesehene Führung (103), entlang der sich ein Teil (114') eines Messkammergehäuses relativ zu der Trägerstruktur bewegen kann, derart, dass im Falle einer thermischen Ausdehnung des beweglichen Teils des Messkammergehäuses eine Krafteinwirkung desselben auf die Trägerstruktur soweit wie möglich vermieden wird.

## Beschreibung

Die Erfindung betrifft eine Messzelle sowie ein Opazimeter, das eine derartige Messezelle aufweist.

Opazimeter sind Messgeräte, die die Trübung ("Opazität") von Fluiden, d. h. Gasen und Flüssigkeiten, messen. Hierzu wird das zu untersuchende Fluid in eine Messkammer eingeleitet, an deren einem Ende eine Lichtquelle, und an deren anderem Ende ein Lichtsensor vorgesehen ist. Die Lichtquelle sendet einen Lichtstrahl durch die Messkammer, der auf den Lichtsensor trifft. Die Intensität des auf den Lichtsensor treffenden Lichtstrahls ist abhängig von der Trübung des Fluids. Je höher die Opazität des Fluids, desto geringer ist die Lichtintensität des Lichtstrahls am Lichtsensor, und desto schwächer ist damit der Pegel des Ausgangssignals des Lichtsensors.

Wird das Opazimeter zur Untersuchung von Abgasen von Kraftfahrzeugen eingesetzt, so ist es vorteilhaft, das Innere der Messkammer auf einem bestimmten Temperaturwert aufzuheizen, um zu vermeiden, dass in den Abgas enthaltener Wasserdampf in der Messkammer kondensiert, da eine derartige Kondensation das Messergebnis verfälschen würde.

Das Beheizen der Messkammer hat jedoch den Nachteil, dass sich das Messkammergehäuse thermisch ausdehnt, womit ein Abstand zwischen der Lichtquelle und dem Lichtsensor und/oder eine relative Ausrichtung der Lichtquelle bezüglich des Lichtsensors während der thermischen Ausdehnung des Messkammergehäuses variieren kann, was wiederum das Messergebnis verfälschen könnte.

Die der Erfindung zugrunde liegende Aufgabe ist, ein Opazimeter der eingangsgenannten Art so weiterzuentwickeln, dass trotz Beheizung der Messkammer der Abstand zwischen der Lichtquelle und dem Lichtsensor sowie die relative Ausrichtung der Lichtquelle bezüglich des Lichtsensors nicht beziehungsweise nur wenig variieren.

Zur Lösung dieser Aufgabe stellt die Erfindung eine Messzelle gemäß Patentanspruch 1 sowie ein Opazimeter gemäß Patentanspruch 15 bereit. Vorteilhafte Ausgestaltungen beziehungsweise Weiterbildungen des Erfindungsgedankens finden sich in den Unteransprüchen.

Gemäß einem Aspekt der Erfindung wird eine Messzelle bereit gestellt, die aufweist: eine Trägerstruktur, die eine Einrichtung zur Aufnahme einer Lichtquelle und eine Einrichtung zur Aufnahme eines Lichtsensors aufweist; eine Messkammer, in die ein zu untersuchendes Fluid einleitbar ist, und die ein Messkammergehäuse aufweist, wobei die Einrichtung zur Aufnahme der Lichtquelle ein erstes Ende des Messkammergehäuses, und die Einrichtung zur Aufnahme des Lichtsensors ein zweites Ende des Messkammergehäuses bilden, derart, dass ein von der Lichtquelle in die Messkammer ausgesandter Lichtstrahl den Lichtsensor trifft; und eine an oder in der Trägerstruktur vorgesehene Führung, entlang der sich ein Teil eines Messkammergehäuses relativ zu der Trägerstruktur bewegen kann, derart, dass im Fall einer thermischen Ausdehnung des beweglichen Teils des Messkammergehäuses eine Krafteinwirkung des Messkammergehäuses auf die Trägerstruktur so weit wie möglich vermieden wird.

Mit anderen Worten: ein Teil des Messkammergehäuses (der "bewegliche Teil", vorteilhafterweise ein Teil, der sich besonders stark thermisch ausdehnt) wird vom Rest des Messkammergehäuses mechanisch entkoppelt. Die Entkopplung erfolgt dadurch, dass der bewegliche Teil gegenüber dem Rest des Messkammergehäuses so bewegbar (beispielsweise verschiebbar) ist, dass während des Verschiebens ein Kraftaustausch zwischen dem beweglichen Teil des Messkammergehäuses und der dem Rest des Messkammergehäuses unterbleibt bzw. dieser so gering ist, dass eine Verbiegung/Verdrillung/Ausdehnung der Messkammer als Ganzes verhindert werden kann. Dadurch kann eine Variation des Abstands zwischen der Lichtquelle und dem Lichtsensor sowie einer relativen Ausrichtung der Lichtquelle und des Lichtsensors zueinander während der thermischen Ausdehung des Messkammergehäuses verhindert oder gering gehalten werden. Die Krafteinwirkung des beweglichen Teils des Messkammergehäuses auf die Trägerstruktur sollte zumindest so gering sein, dass eine draus resultierende Änderung des Abstand zwischen der Lichtquelle und dem Lichtsensor oder der relativen Ausrichtung der Lichtquelle bezüglich des Lichtsensors für die Messgenauigkeit der Messzelle vernachlässigbar ist.

Der bewegliche Teil des Messkammergehäuses ist vorteilhafterweise ein zentraler Teil des Messkammergehäuses, der sich gegenüber den beiden äußeren Teilen (den Einrichtungen zur Aufnahme von Lichtquelle und Lichtsensor) des Messkammergehäuses verschiebbar ist. Je länger der bewegliche Teil des Messkammergehäuses gegenüber dem Rest des Messkammergehäuses ist, umso unempfindlicher ist die Messzelle gegenüber thermischen Ausdehnungen.

Der gewünschte Effekt, dass der Abstand und die relative Ausrichtung von Lichtquelle und Lichtsensor zueinander während der thermischen Ausdehnung des Messkammergehäuses nicht beziehungsweise nur wenig variieren, kann vorteilhafterweise noch dadurch gesteigert werden, dass das Material der Trägerstruktur so gewählt wird, dass die Trägerstruktur einen geringen Wärmeausdehnungskoeffizienten aufweist. In diesem Fall bildet die Trägerstruktur gewissermaßen eine starre "Klammer", die sich bei der Beheizung der Messkammer nicht oder so gut wie nicht ausdehnt und damit den Abstand und die relative Ausrichtung der Lichtquelle und des Lichtsensors zueinander konstant hält. Die Ausdehung des Messkammergehäuses kann somit auf den beweglichen Teil beschränkt werden, der sich relativ zur Klammer bewegen kann, ohne auf eine Klammer eine Kraft auszuüben. Beispielsweise kann das Material der Trägestruktur aus einem Kunststoff mit geringem Wärmeausdehnungskoeffizienten, beispielsweise CFK (kohlenstofffaserverstärkter Kunststoff), oder einem Stahl mit geringem Wärmeausdehnungskoeffizienten (beispielsweise Invarstahl ("Invar" ist eine Eisen-Nickel-Legierung mit beispielsweise 64% Eisen und 36% Nickel oder 65% Eisen und 35% Nickel)) bestehen oder wenigstens zum Teil bestehen.

Der bewegliche Teil des Messkammergehäuses kann beispielsweise als zylinderförmiges Messrohr ausgestaltet sein. Die Erfindung ist jedoch nicht darauf beschränkt, der bewegliche Teil des Messkammergehäuses könnte beispielsweise auch eine rechteckige oder vieleckige Form aufweisen. Die Verwendung eines zylindrischen Messrohes hat jedoch den Vorteil, dass bei einem thermischen Ungleichgewicht im Messrohr resultierende thermische Verspannungen des Messrohrs auf ein Minimum beschränkt bleiben, d. h. die thermische Ausdehnung des Messrohrs in homogener Art und Weise erfolgt. Damit kann wiederum eine inhomogene Krafteinwirkung des Messrohrs auf die Trägerstruktur vermieden oder reduziert werden, womit die Messgenauigkeit weiter verbessert wird. Wird die Trägerstruktur als Trägerohr ausgestaltet, das konzentrisch um das Messrohr herum angeordnet ist und die Einrichtung zur Aufnahme der Lichtquelle mit der Einrichtung zur Aufnahme des Lichtsensors verbindet, kann der stabilisiernde Effekt noch erhöht werden, da die gesamte Verbundstruktur zwischen den Einrichtungen zur Aufnahme der Lichtquelle und Aufnahme des Lichtsensors eine rotationssymmetrische Architektur aufweist. Selbst wenn in diesem Fall eine Kraftübertragung vom Messrohr auf das Trägerohr erfolgt, oder wenn das Trägerrohr aufgrund der Heizung der Messkammer selbst erwärmt wird, kann durch die rotationssymmetrische Architektur Verbundstruktur eine Variation des Abstands bzw. der relativen Ausrichtungen der Lichtquelle zum Lichtsensor weitgehend vermieden werden. Unter Umständen ist bei Verwendung einer rotationssymmetrischen Verbundstruktur die Verwendung eines Trägerstrukturmaterials mit geringem Wärmeausdehnungskoeffizienten nicht notwendig.

Der bewegliche Teil des Messkammergehäuses kann beispielsweise über elastische Dichtungselemente mit der Trägerstruktur verbunden sein, die das Innere der Messkammer gegenüber der Umgebung der Messkammer abdichten. Die Dichtungselemente erfüllen in diesem Fall eine Doppelfunktion: die Dichtungselemente ermöglichen eine Relativbewegung des beweglichen Teils des Messkammergehäuses gegenüber der Trägerstruktur (indem sich Dichtungselemente mit der Bewegung des beweglichen Teils mitdehnen), zusätzlich wird die Messkammer gegenüber der Umgebung abgedichtet. Die Dichtungselemente sindt insbesondere dann vorteilhaft, wenn das zü untersuchende Fluid mittels einer Pumpe in die Messkammer gepumpt beziehungsweise durch die Messkammer hindurch gepumpt wird. In diesem Fall würde ohne Abdichtung des Inneren der Messkammer gegenüber der Umgebung das zu untersuchende Fluid der Messkammer mit Umgebungsluft verdünnt werden (durch die Sogwirkung der Pumpe, die Umgebungsluft durch undichte Stellen in das Innere der Messkammer saugt), womit das Messergebnis verfälscht werden würde. Anstelle der elastische Dichtungselemente kann der bewegliche Teil des Messkammergehäuses auch über elastische Elemente ohne Dichtungsfunktion mit der Trägerstruktur verbunden sein.

Die Dichtungselemente können bei Verwendung eines Messrohres beispielsweise 0-förmige Ringe sein, die jeweils einen Teil der Außenfläche des Messrohres umschließen, d. h. jeweils ganz um das Messrohr herumlaufen.

Das Aufwärmen der Trägerstruktur kann dadurch vermieden bzw. reduziert werden, in dem zwischen dem Messrohr und dem Trägerrohr ein isolierndes Material vorgesehen ist. Damit wird die Empfindlichkeit der Messzelle gegenüber Temperaturschwankungen der Messkammer weiter reduziert. Außerdem hat das isolierende Material den Vorteil, dass die Messkammer beim Beheizen weniger Wärme verliert, womit der Heizvorgang schneller durchgeführt werden kann und die Messzelle nach Inbetriebnahme schneller für die Messung bereit steht.

Die Trägerstruktur kann ein erstes Halteelement aufweisen, das an einem ersten Ende des Trägerrohrs vorgesehen ist, und das einen ersten Teil der Führung zum Führen des ersten Ende des Messrohres aufweist. Ferner kann die Trägerstruktur ein zweites Halteelement aufweisen, das an einem zweiten Ende des Trägerrohrs vorgesehen ist, und das einen zweiten Teil der Führung zum Führen des zweiten Endes des Messrohres aufweist. In dieser Ausführungsform wird das Trägerrohr somit an dessen Enden von der Trägerstruktur gehalten.

Um das Trägerrohr zu halten, kann beispielsweise im ersten Halteelement eine erste Aussparung ausgebildet sein (beispielsweise eine zylindrische Aussparung), in der das erste Ende des Messrohres entlang einer Längsachse des Messrohres verschiebbar gelagert ist. Analog kann im zweiten Halteelement eine zweite Aussparung (beispielsweise eine zylindrische Aussparung) ausgebildet sein, in der das zweite Ende des Messrohres entlang der Längsachse des Messrohres verschiebbar gelagert ist. Der thermischen Ausdehnung des Messrohres wird damit' Rechnung getragen, in dem innerhalb der Aussparungen Platz verfügbar ist, in dem sich das Messrohr hinein dehnen kann.

Das erste Halteelement kann beispielsweise an seinem dem Trägerrohr zugewandten Ende eine zylinderförmige Außenfläche aufweisen, die in das Trägerrohr (das erste Ende des Trägerrohrs) einpassbar ist. Analog kann das dem Trägerrohr zugewandte Ende des zweiten Halteelements eine zylinderförmige Außenfläche aufweisen, die in das Trägerrohr (das zweite Ende des Trägerrohrs) eingepasst ist. In dieser Ausführungsform weisen somit auch die Halteelemente einen rotationssymmetrischen Aufbau auf, was, den positiven Einfluss auf die Messgenauigkeit der Messzelle verstärkt.

Die Einrichtung zur Aufnahme der Lichtquelle kann mit dem ersten Halteelement einstückig ausgebildet und die Lichtquelle wenigstens teilweise in der ersten Aussparung vorgesehen sein, derart, dass sie dem ersten Ende des Messrohres gegenüberliegt. Analog kann die Einrichtung zur Aufnahme des Lichtsensors mit dem zweiten Halteelement einstöckig ausgebildet und der Lichtsensor wenigstens teilweise in der zweiten Aussparung vorgesehen sein, derart, dass dieser dem zweiten Ende des Messrohres gegenüberliegt. Auf diese Art und Weise kann ein kompakter Gesamtaufbau der Messzelle realisiert werden. Auch die Montage der Messzelle wird dadurch erleichtert.

Die Messkammer kann beispielsweise Beheizen des Messkammergehäuses selbst oder durch eine innerhalb der Messkammer vorgesehene Heizeinrichtung, beispielsweise eine Heizwendel. Damit das Messkammergehäuse schnell aufgeheizt werden kann, kann dieses beispielsweise dünnwandig ausgestaltet sein, z. B. aus dünnwandigem Stahl.

Gemäß einem Aspekt der Erfindung kann die Messzelle weiterhin mit einer Regeleinheit versehen sein, mittels derer eine Abstrahlleistung der Lichtquelle so nachregelbar ist, dass eine Stärke eines Ausgangssignals des Lichtsensors bei Abwesenheit von Fluid in der Messkammer unabhängig vom Grad der Verschmutzung der Messkammer (beispielsweise eine Verschmutzung einer Oberfläche der Lichtquelle oder einer Oberfläche des Lichtsensors oder eine Verschmutzung von fluidführenden Komponenten) einem bestimmten Wert entspricht. Auf diese Art und Weise kann das Wartungsintervall der Messzelle verlängert werden. Eine Verschmutzung beispielsweise der Oberfläche der Lichtquelle oder der Oberfläche des Lichtsensors kann demnach vollständig kompensiert werden, solange es möglich ist, durch Erhöhung der Abstrahlleistung der Lichtquelle die Stärke des Ausgangssignals des Lichtsensors bei Abwesenheit Fluid in der Messkammer (d. h. keine Opazität) auf einem bestimmten Wert zu halten.

Unter "Stärke" des Ausgangssignals wird hierbei insbesondere der Signalpegel des Ausgangssignals verstanden. D. h., erhöht sich die Intensität des Lichtstrahls am Lichtsensor, so erhöht sich der Signalpegel des Ausgangssignals, wohingegen sich der Signalpegel des Ausgangssignals abschwächt, sobald sich die Lichtintensität am Lichtsensor abschwächt.

Die Nachregelung kann beispielsweise so erfolgen, dass bei Abwesenheit von Fluid in der Messkammer (keine Opazität) die Stärke des Ausgangsignals des Lichtsensors einem Maximalwert eines Lichtsensor-Ausgangsignalspektrums entspricht. Damit ist gewährleistet, dass unabhängig vom Grad der Verschmutzung der Lichtquelle und des Lichtsensors immer die maximale Bandbreite des Lichtsensor-Ausgangsignalpegels zur Verfügung steht, wodurch die Messgenauigkeit (Auflösung) konstant maximal gehalten werden kann.

Die Nachregelung kann beispielsweise bei Betriebnahme der Messzelle erfolgen, bevor das zu untersuchende Fluid in die Messkammer eingeleitet wird. Zu diesem Zeitpunkt ist es nämlich möglich, zu testen, wie groß der Grad der Verschmutzung ist, da bekannt ist, mit welcher Lichtintensität der Lichtstrahl auf den Lichtsensor treffen sollte.

Die Lichtquelle kann beispielsweise als LED ausgestaltet sein. Beispielsweise kann die Lichtquelle als eine rotes Licht emittierende LED ausgestaltet sein.

Gemäß einem Aspekt der Erfindung weist die Messzelle einen Auslass und ein Einlass auf, die beide in der Nähe des ersten Endes oder beide in der Nähe des zweiten Endes der Messkammer angeordnet sind, wobei der Auslass dem Zentrum der Messkammer näher ist als der Einlass. Die Messzelle weist weiterhin eine Pumpeinrichtung auf, mittels der Fluid über den Auslass aus der Messkammer absaugbar ist. Des Weiteren weist die Messzelle eine Filtereinrichtung auf, mittels der Partikel, die eine Verschmutzung der Messkammer beziehungsweise weiterer Komponenten der Messzelle bewirken können, aus dem durch die Pumpeinrichtung über den Auslass abgesaugten Fluid filterbar sind, um ein gefiltertes Fluid zu erhalten, wobei mittels der Pumpeinrichtung wenigstens ein Teil des gefilterten Fluids über den Einlass wieder in die Messkammer einspeisbar ist.

Mit anderen Worten: Ein Teil des zu untersuchenden Fluids wird der Messkammer entnommen, gefiltert, und das gefilterte Fluid wieder in die Messkammer eingespeist. Dadurch, dass der Einlass näher am ersten Ende bzw. am zweiten Ende liegt als der Auslass, wird bewirkt, dass unmittelbar am ersten Ende der Messkammer bzw. unmittelbar am zweiten Ende der Messkammer nur gefiltertes Fluid vorhanden ist, dass heißt Fluid, das die Lichtquelle bzw. den Lichtsensor nicht verschmutzen kann. Dadurch, dass die unmittelbare Umgebung der Lichtquelle bzw. des Lichtsensors nur bzw. hauptsächlich mit gefiltertem Fluid gefüllt ist, wird verhindert, dass zu untersuchendes Fluid, das die Verschmutzungspartikel enthält, nicht in den Bereich der Lichtquelle bzw. des Lichtsensors gelangen kann. Das gefilterte Fluid wirkt somit wie eine Barriere ("Luftvorhang"), d.h. wie eine Schutzschicht, die sich um die Lichtquelle bzw. den Lichtsensor legt. Auf diese Art und Weise können herkömmliche mechanische Schutzelemente zum Schutz von Lichtquelle bzw. den Lichtsensor wie beispielsweise Quarzscheiben vermieden werden.

Die Schutzfunktion des gefilterten Fluids für die Lichtquelle bzw. den Lichtsensor kann insbesondere dann für einen längeren Zeitraum aufrechterhalten werden, wenn das gefilterte Fluid so in die Messkammer eingespeist wird, dass es laufend vom Einlass in Richtung des Auslasses fließt. Auf diese Art und Weise kann ein laminarer Strom gereinigten Fluids erzeugt werden, der von einem Ende der Messkammer ins Zentrum der Messkammer gerichtet ist und eine Diffusion des zu untersuchenden Fluids (das die Verschmutzungspartikel enthält) in Richtung der Enden der Messkammer wirksam unterbindet. Der in das Innere der Messkammer gerichtete Fluidstrom aus gereinigtem Fluid sollte so verlaufen, dass dieser durch den Auslass erneut abgesaugt wird, um zu verhindern, dass das zu untersuchende Fluid zu stark verdünnt wird, was zu einer Verfälschung der Opazitätsmessung führen würde (die Verschmutzungspartikel "fehlen" im Strom gereinigten Fluids).

In der Messkammer kann eine erste Blende vorgesehen sein, die zwischen dem Auslass und dem Einlass angeordnet ist und die eine Öffnung aufweist, durch die das gefilterte Fluid in Richtung des Auslasses strömt, und durch die der Lichtstrahl hindurch verläuft. Auf diese Art und Weise braucht der Fluidstrom aus gereinigtem Fluid nicht den gesamten Querschnitt der Messkammer auszufüllen, um die Lichtquelle bzw. den Lichtsensor zu schützen. Vielmehr ist es ausreichend, wenn der Fluidstrom gereinigten Fluids den Querschnitt der Öffnung der ersten Blende voll ausfüllt. Damit reicht ein kleinerer Fluidstrom gereinigten Fluids für die Schutzfunktion von Lichtquelle bzw. Lichtsensor aus.

Der Fluideinlass der Messzelle, über den das zu untersuchende Fluid in die Messkammer einleitbar ist, befindet sich vorteilhafterwiese an einem Ende der Messkammer, der dem Ende der Messkammer, an dem der Auslass und der Einlass angeordnet sind, gegenüberliegt. Auf diese Art und Weise kann ein Fluidstrom zu untersuchenden Fluids erzeugt werden, der von dem Fluideinlass in Richtung des Auslasses fließt und damit die gesamte Messkammer ausfüllt.

In der Messkammer kann eine zweite Blende vorgesehen sein, die sich in der Nähe des Fluideinlasses befindet, und die so ausgestaltet ist, dass das zu untersuchende Fluid, das über den Fluideinlass in die Messkammer eingeleitet wird, mittels der zweiten Blende in Richtung des Auslasses gelenkt wird. Dadurch, dass das zu untersuchende Fluid mittels der zweiten Blende in Richtung des Auslasses gelenkt wird, und das zu untersuchende Fluid durch den Auslass abgesaugt wird, entsteht ein laminarer Strom zu untersuchenden Fluids, der von der zweiten Blende weg in das Zentrum der Messkammer gerichtet ist. Auf diese Art und Weise kann verhindert werden, dass zu untersuchendes Fluid in Richtung desjenigen Endes der Messkammer diffundiert, in dessen Nähe der Fluideinlass vorgesehen ist. Auf diese Art und Weise kann verhindert werden, dass das zu untersuchende Fluid auf die Lichtquelle bzw. den Lichtsensor trifft (je nachdem, welche dieser Komponenten an diesem Ende der Messkammer angeordnet ist). Somit ist es möglich, sowohl die Lichtquelle als auch den Lichtsensor mit lediglich einem Luftvorhang und ohne die Verwendung teurer Schutzkomponenten wie beispielsweise Quarzgläsern effektiv zu schützen.

Die zweite Blende kann beispielsweise als Scheibe mit einer Öffnung ausgestaltet sein. Zusätzlich kann auf der Scheibe ein rohrförmiger Aufsatz vorgesehen sein, derart, dass das Innere des rohrförmigen Aufsatzes eine Verlängerung der Öffnung der Scheibe bildet, und der Lichtstrahl durch die Öffnung und das Innere des Aufsatzes hindurch verläuft. Der Aufsatz kann dem Zentrum der Messkammer näher sein als die Scheibe, oder umgekehrt. Der Fluideinlass kann dem rohrförmigen Aufsatz gegenüberliegen. Es sei angenommen, dass der rohrförmige Aufsatz von der Scheibe weg in das Innere der Messkammer hineinragt. Wird nun beispielsweise der Fluideinlass so angeordnet, dass das zu untersuchende Fluid seitlich auf den Aufsatz trifft, so wird es durch die Scheibe abgehalten, direkt zum Ende der Messammer zu fließen, und mittels des rohrförmigen Aufsatzes in das Innere der Messkammer umgelenkt. Auf diese Art und Weise kann ein besonders guter Schutz der Lichtquelle bzw. des Lichtsensors erzielt werden. Auf der ersten Blende kann ebenfalls ein solcher Aufsatz vorgesehen sein.

In der vorangehenden Ausführungsform wurde davon ausgegangen, dass ein Auslass und ein Einlass an der Messkammer vorgesehen sind. Jedoch können auch mehrere Auslässe und Einlässe vorgesehen werden. Beispielsweise kann die Messzelle einen ersten Auslass und einen ersten Einlass aufweisen, die beide in der Nähe des ersten Endes der Messkammer angeordnet sind, wobei der erste Auslass dem Zentrum der Messkammer näher ist als der erste Einlass. Weiterhin kann die Messzelle einen zweiten Einlass und einen zweiten Auslass aufweisen, die beide in der Nähe des zweiten Endes der Messkammer angeordnet sind, wobei der zweite Auslass dem Zentrum der Messkammer näher ist als der zweite Einlass. In dieser Ausführungsform ist mittels der Pumpeinrichtung Fluid über den ersten Einlass und über den zweiten Auslass aus der ersten Messkammer absaugbar, und mittels der Filtereinrichtung Partikel, die eine Verschmutzung der Messkammer bzw. anderer Komponenten der Messzelle bewirken können, aus dem durch die Pumpeinrichtung über den ersten Auslass und den zweiten Auslass abgesaugten Fluid filterbar, um ein gefiltertes Fluid zu erhalten. Mittels der Pumpeinrichtung kann wenigstens ein Teil des gefilterten Fluids über den ersten Einlass und den zweiten Einlass wieder in die Messkammer eingespeist werden. In dieser Ausführungsform kann der Fluideinlass beispielsweise mittig an der Messkammer angebracht sein, sodass der Fluideinlass denselben Abstand zum ersten Auslass und zum zweiten Auslass aufweist. Der Fluideinlass kann auch an einer anderen Stelle zwischen dem ersten Anlass und dem zweiten Auslass angeordnet sein.

In dieser Ausführungsform kann in der Messkammer eine erste Blende vorgesehen sein, die zwischen dem ersten Auslass und dem Einlass eingeordnet ist, und die eine Öffnung aufweist, durch die das gefilterte Fluid von dem ersten Einlass in Richtung des ersten Auslasses strömt, und durch die der Lichtstrahl hindurch verläuft. Weiterhin kann in der Messkammer eine zweite Blende vorgesehen sein, die zwischen dem zweiten Auslass und dem zweiten Einlass angeordnet ist, und die eine Öffnung aufweist, durch die das gefilterte Fluid von dem zweiten Einlass in Richtung des zweiten Auslasses strömt, und durch die der Lichtstrahl hindurch verläuft. In dieser Ausführungsform werden somit zwei Luftvorhänge verwendet, wobei jeder der Luftvorhänge eine der Komponenten Lichtquelle oder Lichtsensor vor Verunreinigungen durch die Verschmutzungspartikel, die sich in dem zu untersuchenden Fluid befinden, schützt.

Generell sollten die Luftvorhänge so ausgestaltet sein, dass der Anteil des gefilterten Fluids, der wieder in die Messkammer eingespeist wird, bezüglich des abgesaugten Fluids so austariert wird, dass das zu untersuchende Fluid nicht oder nur zum vernachlässigbaren Anteil zu der Lichtquelle oder zu dem Lichtsensor gelangen kann, andererseits aber keine zu starke Verdünnung des zu untersuchenden Fluids durch das eingespeiste gefilterte Fluid erflogt. Eine derartige Einstellung des Anteils des gefilterten Fluids kann beispielsweise über Steuerelemente wie Drosseleinrichtungen erfolgen, die in der Pumpeinrichtung vorgesehen sind.

Die Erfindung wird im Folgenden unter Bezugnahme auf die Figuren in beispielsweiser Ausführungsform näher erläutert. Es zeigen:
Figur 1 eine schematische Querschnittsdarstellung einer ersten erfindungsgemäßen Ausführungsform einer Messzelle;
Figur 2 eine schematische Querschnittsdarstellung einer zweiten erfindungsgemäßen Ausführungsform einer Messzelle; und
Figur 3 eine schematische Querschnittsdarstellung einer dritten erfindungsgemäßen Ausführungsform einer Messzelle.

In den Figuren sind einander entsprechende Bereiche, Bauteile oder Bauteilgruppen mit denselben Bezugsziffern gekennzeichnet.

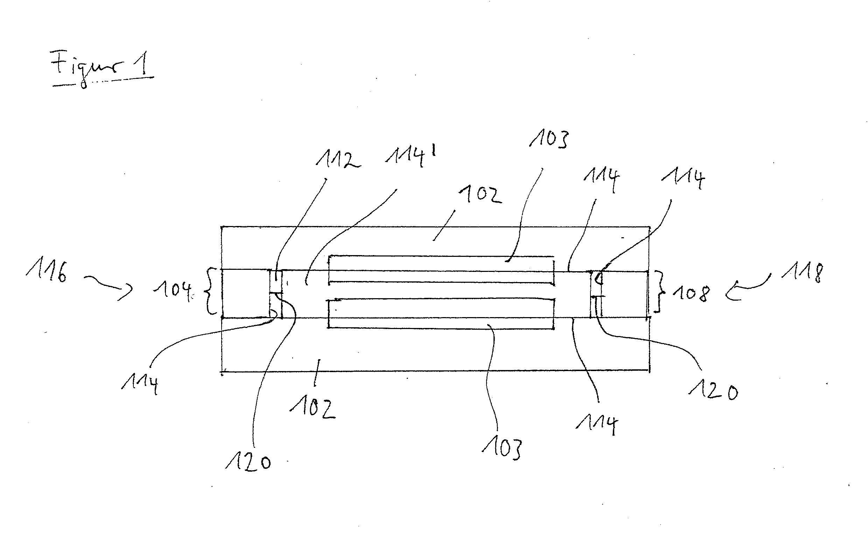

Figur 1 zeigt eine Prinzipskizze einer Messzelle 100. Die Messzelle 100 weist eine Trägerstruktur 102 auf, die eine Einrichtung 104 zur Aufnahme einer Lichtquelle, und eine Einrichtung 108 zur Aufnahme eines Lichtsensors aufweist. Die Messzelle 100 weist weiterhin eine Messkammer 112 auf, in die ein zu untersuchendes Fluid einleitbar ist, und die ein Messkammergehäuse 114 aufweist. Die Einrichtung 104 zur Aufnahme der Lichtquelle bilden ein erstes Ende 116 des Messkammergehäuses 114. Die Einrichtung 108 zur Aufnahme des Lichtsensors bildet ein zweites Ende 118 des Messkammergehäuses 114. Die oben beschriebenen Komponenten sind so gegeneinander ausgerichtet, dass ein von der Lichtquelle in die Messkammer 112 ausgesandter Lichtstrahl 120 auf den Lichtsensor trifft. Die Messzelle 100 weist eine in der Trägerstruktur 102 vorgesehene Führungn 103 auf, entlang der sich ein beweglicher Teil 114' relativ zu der Trägerstruktur 102 bewegen kann, derart, dass im Fall der thermischen Ausdehnung des beweglichen Teils des Messkammergehäuses 114' eine Krafteinwirkung desselben auf die Trägerstruktur 102 soweit wie möglich vermieden wird.

Wie in Figur 1 gezeigt ist, wird das Messkammergehäuse 114 durch mehrere Komponenten gebildet: zum einen aus Begrenzungswänden, die in der Trägerstruktur 102 selbst ausgebildet sind (z.B. die der Messkammer 112 zugewandten Wände der Einrichtungen 104, 108), andererseits die Innenwände des Gehäuseteils 114' (beweglicher Teil des Messkammergehäuses), der kein Teil der Trägerstruktur 102 darstellt.

Die Führungsstruktur 103 ist in der Figur 1 gezeigten Prinzipskizze nur schematisch angedeutet und kann auf vielfältige Art und Weise realisiert sein, beispielsweise durch eine Gleitschiene, elastische Elemente, Rollen, etc.

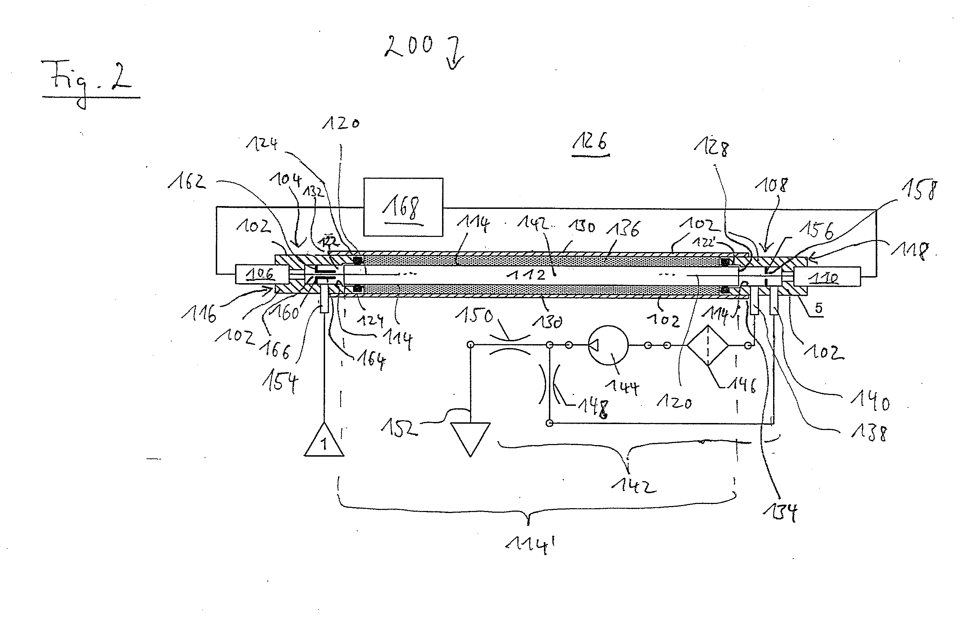

Figur 2 zeigt eine Messzelle 200, die eine mögliche Realisierung der in Figur 1 gezeigten Prinzipskizze darstellt.

Die Messzelle 200 weist eine Trägerstruktur 102 auf, die ihrerseits eine Einrichtung 104 zur Aufnahme einer Lichtquelle 106 und eine Einrichtung 108 zur Aufnahme eines Lichtsensors 110 aufweist. Die Messzelle 200 weist weiterhin eine Messkammer 112 auf, in die ein zu untersuchendes Fluid einleitbar ist. Die Messkammer 112 weist ein Messkammergehäuse 114 auf, wobei die Einrichtung 104 zur Aufnahme der Lichtquelle 106 ein erstes Ende 116 des Messkammergehäuses 114, und die Einrichtung 108 zur Aufnahme des Lichtsensors 110 ein zweites Ende 118 des Messkammergehäuses 114 bilden. Ein von der Lichtquelle 106 in die Messkammer 112 ausgesandter Lichtstrahl 120 trifft auf den Lichtsensor 110. An der Trägerstruktur 102 ist eine Führung (Innenwände der in der Einrichtung 104 ausgebildeten Aussparung 122 sowie Innenwände der in Einrichtung 108 ausgebildeten Ausspannungen 122' sowie elastische Dichtungselemente 124) vorgesehen, entlang der sich ein Teil 114' des Messkammergehäuses 114 relativ zu der Trägerstruktur 102 bewegen kann, derart, dass im Falle einer thermischen Ausdehnung des beweglichen Teils 114' des Messkammergehäuses 114 eine Krafteinwirkung desselben auf die Trägerstruktur 102 soweit wie möglich vermieden wird.

Der bewegliche Teil 114' des Messkammergehäuses 114 ist in dieser Ausführungsform über elastische Dichtungselemente 124 mit der Trägerstruktur 102, genauer gesagt mit der Einrichtung 104 und der Einrichtung 108 der Trägerstruktur 102 verbunden. Die elastischen Dichtungselemente 124 sind in dieser Ausführungsform Dichtungsringe, die um die Außenseite des beweglichen Teils 114' des Messgehäuses 114 herum verlaufen und in Rillen eingepasst sind, die in der Innenwand der Einrichtung 104 und in der Innenwand der Einrichtung 104 ausgebildet sind.

In dieser Ausführungsform ist der bewegliche Teil 114' des Messkammergehäuses 114 als zylinderförmiges Messrohr 128 ausgestaltet. Weiterhin weist die Trägerstruktur 102 in dieser Ausführungsform ein Trägerrohr 113 auf, das ebenfalls zylinderförmig ausgestaltet ist und konzentrisch um das Messrohr 128 herum angeordnet ist. Das Trägerrohr 130 verbindet die Einrichtung 104 zur Aufnahme der Lichtquelle 106 mit der Einrichtung 108 zur Aufnahme des Lichtsensors 110 (vorzugsweise möglichst starr). Die Verbindung erfolgt dadurch, dass ein der Lichtquelle abgewandtes Ende der Einrichtung 104 sowie ein dem Lichtsensor 110 abgewandtes Ende der Einrichtung 108 jeweils eine zylinderförmige Außenfläche aufweisen. Die zylinderförmige Außenfläche des der Lichtquelle 106 abgewandten Endes der Einrichtung 104 ist in ein erstes Ende 132 des Trägerrohres 130 eingepasst, und das den Lichtsensor 110 abgewandte Ende der Einrichtung 108 ist in ein zweites Ende 134 des Trägerrohres 130 eingepasst. Zwischen dem Messrohr 128 und dem Trägerrohr 130 ist ein isolierendes Material 136 vorgesehen, dass das Messrohr 128 gegenüber dem Trägerrohr 130 thermisch isoliert.

Die elastischen Dichtungselemente 124 bewirken auch (neben ihrer Funktion als Führung), dass das Innere der Messkammer 112 luftdicht gegenüber der Umgebung 126 der Messzelle 200 abgedichtet ist. Das heißt, die elastischen Dichtungselemente 124 verhindern, dass sich Fluid aus der Messkammer 112 heraus über undichte Stellen zwischen dem Trägerrohr 130 und der Einrichtungen 104/108 in die Umgebung 126 der Messzelle 200 gelangt.

Dadurch, dass der Verbund aus Messrohr 128, Trägerrohr 130, Einrichtung 104, Einrichtung 108 sowie isolierende Material 136 als Ganzes einen rotationssymmetrischen Aufbau aufweist (rotationssymmetrisch um den Lichtstrahl 120, d. h. die Längsachse des Messrohres 128), ist der Verbund und damit die Messzelle 200 unempfindlich gegenüber thermischen Ungleichgewicht innerhalb der Messkammer 112 beziehungsweise innerhalb des Messrohres 128.

Dadurch, dass die Einrichtung 104 gleichzeitig zur Aufnahme zur Lichtquelle 106 (die beispielsweise in die Einrichtung 104 eingeschraubt oder mit dieser verrastet werden kann) sowie zur Führung des Trägerrohres 128 dient (indirekt über die elastischen Dichteelemente 124), kann die Messzelle 200 äußerst kompakt ausgestaltet werden, da nicht getrennte Einrichtungen zum Halten der Lichtquelle 106 sowie zum Halten des Messrohres 128 benötigt werden. Weiterhin gestaltet sich die Montage der Messzelle 200 einfach, da die Einrichtung 104 bereits im Vornherein mit der Lichtquelle 106 bestückt werden kann und das Gesamtmodul als Ganzes auf einfach Art und Weise mit dem Trägerrohr 130 verbunden werden kann, in dem das Gesamtmodul einfach in das Ende 132 des Trägerrohres eingesteckt wird. Analoge Überlegungen gelten auch für die Einrichtung 108 und den Lichtsensor 110 (der beispielsweise in die Einrichtung 108 eingeschraubt oder mit dieser verrastet werden kann).

In dieser Ausführungsform ist nahe des zweiten Endes 118 der Messkammer 112 ein Auslass 138 sowie ein Einlass 140 vorgesehen. Der Auslass 138 ist einem Zentrum 142 der Messkammer 112 näher als der Einlass 140. Weiterhin ist eine Pumpeinrichtung 142 vorgesehen, mittels der Fluid über den Auslass 138 aus der Messkammer 112 absaugbar ist. Die Pumpeinrichtung 142 weist eine Pumpe 144 sowie einen Filter 146 auf. Der Eingang des Filters 146 ist mit dem Ausgang des Auslasses 138 verbunden. Der Ausgang des Filters 146 ist mit dem Eingang der Pumpe 154 verbunden. Der Ausgang der Pumpe 144 ist über ein erstes Steuerelement, beispielsweise eine Drossel 148 mit dem Eingang des Einlasses 140 verbunden. Der Ausgang der Pumpe 144 ist weiterhin über ein zweites Steuerelement 140 (beispielsweise eine Drossel) mit einem Fluidauslass 152 verbunden. Der Fluidauslass 152 kann beispielsweise mit einem Fluideinlass eines weiteren Messgeräts, dass der Messkammer 200 nachgeschaltet ist, verbunden sein. Damit ist es möglich, gleichzeitig und ohne den Einsatz eines weiteren Pumpmechanismus weitere Parameter des in die Messkammer 112 eingespeisten Fluids zu messen (z.B. der CO2-Anteil im Abgas), die durch die Messzelle 200 nicht erfasst werden. Hierzu wird ausgenutzt, dass das Fluid für nachfolgende Messungen wegen des Filters 146 schon vorgefiltert ist (beispielsweise können durch den Filter 146 bereits Rußpartikel (Verschmutzungspartikel, die für die Trübungsmessung relevant sind) aus dem Fluid herausgefiltert werden), und dass die Gaszusammensetzung durch die Rückführung des gereinigten Fluids in die Messkammer 112 über den Einlass 140 nicht beeinflusst wird. Die Messzelle 200 weist weiterhin einen Fluideinlass 154 auf, der nahe dem ersten Ende 116 der Messkammer 112 angeordnet ist. Über den Fluideinlass 154 wird das zu untersuchende Fluid in die Messkammer 112 eingespeist.

In der Messkammer 112 ist eine erste Blende 156 vorgesehen, die zwischen dem Auslass 138 und dem Einlass 140 angeordnet ist und die eine Öffnung 158 aufweist, durch die gefiltertes Fluid in Richtung des Auslasses 138 strömen kann, und durch die hindurch der Lichtstrahl 120 verläuft. In der Messkammer 112 ist weiterhin eine zweite Blende 160 vorgesehen, die sich in der Nähe des Fluideinlasses 154 befindet und so ausgestaltet ist, dass zu untersuchendes Fluid, das über den Fluideinlass 154 in die Messkammer 112 eingeleitet wird, durch die zweite Blende 160 in Richtung des Auslasses 138 gelenkt wird. Die zweite Blende 160 weist eine Scheibe mit einer Öffnung 166 auf, auf der ein rohrförmiger Aufsatz 164 vorgesehen ist, derart, dass das Innere des rohrförmigen Aufsatzes 164 eine Verlängerung der Öffnung 166 der Scheibe 162 bildet, und der Lichtstrahl 120 durch die Öffnung 166 und das Innere des Aufsatzes 164 hindurch verläuft. Der Aufsatz 164 ist dem Zentrum 142 der Messkammer näher als die Scheibe 162. Der Fluideinlass 164 liegt dem Aufsatz 164 gegenüber.

Im Folgenden soll die Wirkungsweise der Messzelle 200 näher erläutert werden.

Zunächst wird, falls erforderlich, die Messkammer 112 auf Betriebstemperatur geheizt. Dies kann beispielsweise dadurch erfolgen, dass eine in dem Messkammergehäuse 114 des beweglichen Teils 114' (dem Messrohr 128) befindliche Heizspirale das Messrohr 128 aufheizt. Alternativ wäre es möglich, eine innerhalb der Messkammer 112 vorgesehene Heizspirale zu aktivieren. Nach bzw. während der Aufheizphase der Messkammer 112 wird das zu untersuchende Fluid über den Fluideinlass 154 in die Messkammer 112 geleitet. Das zu untersuchende Fluid wird durch die zweite Blende 160 in Richtung des Zentrums 142 der Messkammer 112 gelenkt. Sofern das ins Zentrum 142 gelenkte zu untersuchende Fluid eine laminare Strömung ist, wird kein bzw. nur ein verschwindend geringer Teil des zu untersuchenden Fluids durch die Öffnung 166 der zweiten Blende 160 zu der Lichtquelle 106 gelangen. Dies bedeutet, dass die Lichtquelle 106 durch die zweite Blende 160 vor dem zu untersuchenden Fluid gut geschützt ist.

Das in die Messkammer 112 eingespeiste zu untersuchende Fluid wird von dem Lichtstrahl 120 durchleuchtet. Je nach Trübung des zu untersuchenden Fluids ist die Intensität des Lichtstrahls 120, die auf den Lichtsensor 110 trifft, stärker oder schwächer. Ein Ausgangssignal des Lichtsensors 110, das heißt ein Signalpegel des Ausgangssignals des Lichtsensors 110 gibt demnach Aufschluss über Ausmaß der Trübung (Opazität) des zu untersuchenden Fluids. Ein Teil des in die Messkammer 112 eingespeisten zu untersuchenden Fluids wird über den Auslass 138 abgesaugt, mittels des Filters 146 gefiltert, wobei ein erster Teil des gefilterten Fluids über das erste Steuerelement 148 dem Einlass 140 zugeführt wird und ein zweiter Teil des gefilterten Fluids über das zweite Steuerelement 150 dem Fluidauslass 152 zugeführt wird. Das Absaugen des Fluids über den Auslass 138 erfolgt mittels der Pumpe 144. Die Menge des durch den Fluidauslass 152 abgeführten Fluids kann beispielsweise der Menge des durch den Fluideinlass 154 in die Messkammer eingespeisten Fluids entsprechen. Dies ist jedoch nicht zwingend der Fall. Beispielsweise kann, nachdem eine gewisse Menge an Fluid in die Messkammer 112 eingeführt wurde, der Fluideinlass 154 geschlossen werden, und das zweite Steuerelement der 150 geschlossen werden, sodass die gleiche Menge, die an Fluid über den Auslass 138 abgesaugt wird, über den Einlass 140 wieder in die Messkammer 112 eingespeist wird. Auf diese Art und Weise bleibt die Gesamtmenge des Fluids innerhalb der Messkammer 112 konstant. Hierbei kann die Menge, die an Fluid über den Auslass 138 pro Zeiteinheit abgesaugt wird und über den Einlass 140 wieder in die Messkammer 112 eingespeist wird, so groß gewählt werden, dass ein Reinigen des Bereichs zwischen dem Einlass 140 und dem Auslass 138 erfolgt. Mit anderen Worten: Durch entsprechendes Ansteuern des ersten und zweiten Steuerelements 148, 150 kann der über den Einlass 140 in die Messkammer 112 eingespeiste Fluidstrom wahlweise zum Ausbilden eines Luftvorhangs (schwacher Fluidstrom, erstes und zweites Steuerelement 148, 150 sind jeweils teilweise geschlossen) oder zum Reinigen des Bereichs zwischen dem Einlass 140 und dem Auslass 138 (starker Fluidstrom, erstes Steuerelement 148 ist vollständig geöffnet, zweites Steuerelement 150 ist vollständig geschlossen) verwendet werden. Generell können die ersten und zweiten Steuerelemente 148, 150 unabhängig voneinander variabel ansteuerbar ausgestaltet sein. Alternativ können die ersten und zweiten Steuerelemente 148, 150 auch nicht-ansteuerbar ausgestaltet sein, d.h. jeweils fest auf einen konstanten Durchlasswert eingestellt sein.

Das über den Einlass 140 in die Messkammer 112 eingespeiste gefilterte Fluid passiert die Öffnung 148 der ersten Blende 156 und bewirkt damit, dass die Öffnung 158 durch einen "Fluidvorhang" verschlossen ist. Das heißt, das in der Messkammer 112 befindliche, zu untersuchende Fluid kann die Öffnung 158 in Richtung des Lichtsensors 110 nicht passieren. Auf diese Art und Weise ist der Lichtsensor 110 gegenüber Schmutzpartikeln, die zur Verschmutzung des Lichtsensors 110 beitragen könnten, geschützt. Vorzugsweise ist die Stärke des gefilterten Luftstroms (Volumen und Stömungsgeschwindigkeit), der die Öffnung 158 der ersten Blende 156 passiert, so eingestellt, dass das durch die Öffnung 158 hindurchgetretene gefilterte Fluid wieder vollständig vom Auslass 138 aus der Messkammer 112 herausgesaugt wird. Damit kann verhindert werden, dass das zu untersuchende Fluid 112 durch das gefilterte Fluid verdünnt wird, d. h. verhindert werden, dass so viele Verschmutzungspartikel aus dem zu untersuchenden Fluid herausgefiltert werden, dass der Messwert der Messzelle 200 nicht mehr verlässlich ist.

Andererseits sollte die Menge des über den Einlass 140 eingespeisten gefilterten Fluids so groß sein, dass die Öffnung 158 durch das gefilterte Fluid wirksam "verschlossen" wird.

Dehnt sich infolge einer Erwärmung das Messrohrs 128 aus, so kann sich ein erstes Ende des Messrohrs 128 in Richtung der zweiten Blende 160, und ein zweites Ende des Messrohrs 128 in Richtung der ersten Blende 156 ausdehnen. Dadurch, dass das Messrohr 128 nach beiden Seiten hin Spiel hat, wird verhindert, dass eine Ausdehnung des Messrohrs 128 an die Trägerstruktur 102 anstößt und damit eine Kraft auf die Trägerstruktur 102 ausübt, die zur Verbiegung oder Verdrillung der Trägerstruktur 102 führen könnte, womit der Abstand zwischen der Lichtquelle 106 und dem Lichtsensor 110 und/oder die relative Ausrichtung der Lichtquelle 106 zum Lichtsensor 110 geändert werden könnte, was zu Messungenauigkeiten (Messwert trifft) führen würde. Die Ausdehnung des Messrohrs 128 wird weiterhin durch die elastischen Dichtungselemente 124 ermöglicht, die sich bei Ausdehnen des Messrohrs 128 mitdehnen, ohne die Dichtung der Messkammer 112 gegenüber der Umgebung 126 zu beinträchtigen.

Unter einer relativen Änderung der gegenseitigen Ausrichtung der Lichtquelle 106 und dem Lichtsensor 110 wird insbesondere verstanden, dass der von der Lichtquelle 106 ausgesandte Lichtstrahl 120 nicht mehr mittig auf den Lichtsensor 110 trifft, wenn dies im Normalzustand der Fall war.

Dadurch, dass zwischen dem Messrohr 128 und dem Trägerrohr 130 ein isolierendes Material 136 vorgesehen ist, heizt sich das Trägerrohr 130 wesentlich weniger, wenn überhaupt, auf als das Messrohr 128. Auf diese Art und Weise kann ein Ausdehnen der Trägerstruktur 102 und eine damit verbundene Änderung des Abstands bzw. der relativen Lage zwischen Lichtquelle 106 und Lichtsensor 110 weiter reduziert werden. Diese Reduzierung bzw. Vermeidung der thermischen Ausdehnung der Trägerstruktur 102 kann noch dadurch verstärkt werden, indem das Material des Trägerrohrs 130 und optional auch der Einrichtung 104 und der Einrichtung 108 so gewählt werden, dass dieses keinen (Wärmeausdehnungskoeffizient Null oder nahe Null) bzw. einen nur sehr geringen Wärmeausdehnungskoeffizient aufweist. Damit kann eine thermische Ausdehnung der Trägerstruktur selbst dann verhindert werden, wenn diese sich erwärmen sollte. Vorteil hierbei ist, dass die Trägerstruktur 102 auch unabhängig wird (hinsichtlich Dehnung, Verbiegung oder Verdrillung) von äußeren Temperatureinflüssen (Umgebung der Messzelle).

Die Messzelle 200 weist weiterhin eine Regeleinheit 168 auf, die mit der Lichtquelle 106 und dem Lichtsensor 110 verbunden ist. Mittels der Regeleinheit 168 ist eine Abstrahlleistung der Lichtquelle 106 so nachregelbar, dass eine Stärke eines Ausgangssignals des Lichtsensors 110 bei Abwesenheit von Fluid in der Messkammer 112 unabhängig vom Grad der Verschmutzung der Messkammer 112 einem bestimmten Wert entspricht. Damit kann insbesondere bewirkt werden, dass eine Verschmutzung einer Oberfläche der Lichtquelle 106 oder einer Oberfläche des Lichtsensors 110 (oder andere Komponenten der Messzelle 200, an denen das Fluid vorbeiströmt/ in Kontakt kommt) die Messgenaugkeit der Messzelle verringert. Erfolgt die Nachregelung so, dass bei Abwesenheit von Fluid in der Messkammer die Stärke des Ausgangssignals des Lichtsensors einem Maximalwert eines Lichtsensor-Ausgangssignalspektrums entspricht, so kann die Empfindlichkeit der Messzelle 200 jederzeit konstant gehalten werden. Die Nachregelung erfolgt vorzugsweise bei Inbetriebnahme der Messzelle, bevor das zu untersuchende Fluid über den Fluideinlass 154 in die Messkammer 112 eingeleitet wird.

Auf diese Art und Weise kann bei Abgasmessungen insbesondere der negative Einfluss von Rußpartikeln auf den Messwert für eine gewisse Zeit unterdrückt werden, womit sich das Wartungsintervall der Messzelle (Säubern der Messzelle) verlängert.

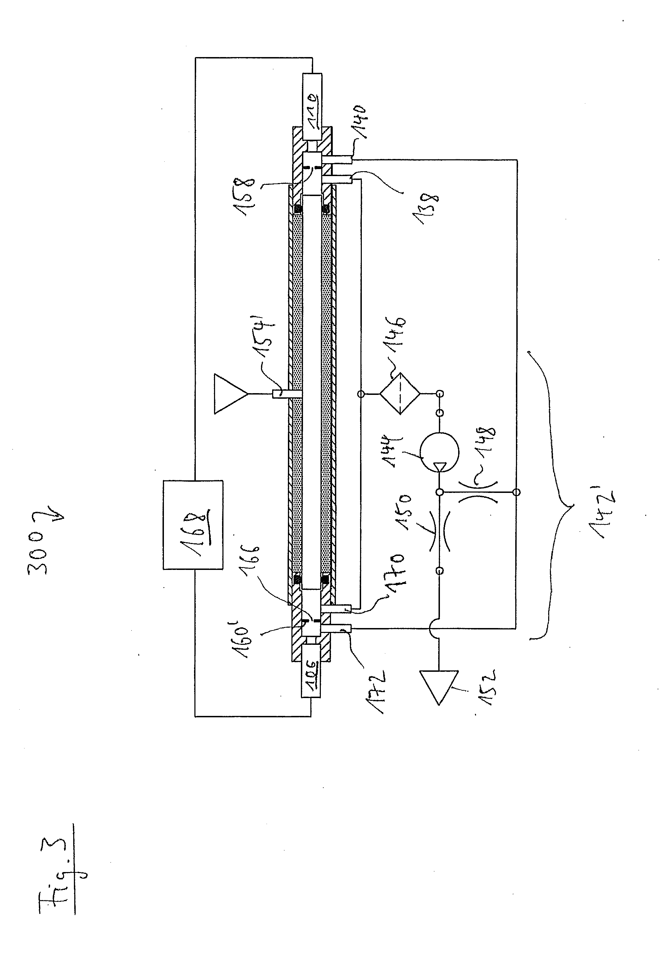

Figur 3 zeigt eine weitere Ausführungsform einer Messzelle 300. Die Messzelle 300 entspricht in ihrem Aufbau im Wesentlichen dem der Messzelle 200, die in Figur 2 gezeigt ist. Jedoch ist in dieser Ausführungsform, zusätzlich zum Auslass 138 (erster Auslass) und zum Einlass 140 (erster Einlass) ein weiterer Auslass 170 (zweiter Auslass) sowie ein weiterer Einlass 172 (zweiter Einlass) vorgesehen. Der zweite Auslass 170 und der zweite Einlass 172 sind in der Nähe des ersten Endes 116 der Messkammer 112 vorgesehen. Die zweite Blende 160 ist durch eine zweite Blende 160' ersetzt, die den gleichen Aufbau wie die erste Blende 156 aufweist. Das heißt, dass die zweite Blende 160' eine Scheibe mit einer Öffnung ist, durch die der Lichtstrahl 120 hindurch verläuft, wobei die Blende 160' zwischen den zweiten Auslass 170 und dem zweiten Einlass 172 angeordnet ist. Weiterhin ist der Eingang des Filters 146 sowohl mit dem Ausgang des ersten Auslasses 138 als auch mit dem Ausgang des zweiten Auslasses 170 verbunden. Der Ausgang der Pumpe 144 ist über das erste Steuerelement 148 sowohl mit dem Eingang des ersten Einlasses 140 als auch mit dem Eingang des zweiten Einlasses 172 verbunden. Der Fluideinlass 154 zum Einbringen des zu untersuchenden Fluids in die Messkammer 122 ist in dieser Ausführungsform mittig zwischen der ersten Blende 156 und der zweiten Blende 160' vorgesehen.

Im Folgenden soll die Funktionsweise der Messzelle 300 näher erläuter werden.

Die Funktionsweise der Messzelle 300 entspricht der der Messzelle 200. Jedoch wird bei der Messzelle 300 das zu untersuchende Fluid mittig in die Messkammer 112 eingeführt, von wo aus es sich dann nach beiden Seiten hin sowohl in Richtung der ersten Blende 156 als auch in Richtung der zweiten Blende 160' ausbreitet. Die Pumpeinrichtung 142' saugt Fluid aus der Messkammer 122 über den ersten Auslass 138 sowie den zweiten Auslass 170 ab. Das durch den Filter 146 gefilterte Fluid wird mittels der Pumpe 144 über das Steuerelement 148 sowohl dem ersten Einlass 140 als auch dem zweiten Einlass 172 zugeführt. Somit tritt ein erster Teil des gefilterten Fluids über den ersten Einlass 140 durch die erste Blende 165 hindurch in Richtung des ersten Auslasses 138. Weiterhin tritt ein zweiter Teil des gefilterten Fluids über den zweiten Einlass 172 und über die zweite Blende 160 in Richtung des zweiten Auslasses 172 geführt. Somit verwendet die Messzelle 300 zwei "Luftvorhänge", einen zum Verschließen der Öffnung 158, und einen zum verschließen der Öffnung 166. Der Fluidauslass 152 kann beispielsweise mit einem Fluideinlass eines weiteren Messgeräts, das der Messzelle 300 nachgeschaltet ist, verbunden sein. Das diesbezüglich im Zusammenhang mit der Messzelle 200 Gesagte gilt hier analog.

In der Messzelle 200 kann die erste Blende 156 auch analog zur zweiten Blende ausgestaltet sein, d.h. einen rohrförmiger Aufsatz aufweisen, derart, dass das Innere des rohrförmigen Aufsatzes eine Verlängerung der Öffnung 158 der Scheibe der ersten Blende 156 bildet, und der Lichtstrahl 120 durch die Öffnung 158 und das Innere des Aufsatzes hindurch verläuft. Der Aufsatz kann wahlweise auf einer der beiden Seiten der Scheibe der ersten Blende 156 angebracht sein. Weiterhin kann alternativ der Aufsatz 164 der zweiten Blende 160 auch auf der anderen, der Lichtquelle 106 zugewandten Seite der Scheibe 162 angeordnet sein. Der Aufsatz 164 der zweiten Blende 160 kann auch weggelassen werden, d.h. die zweite Blende 160 kann lediglich als Scheibe ausgebildet sein.

In der Messzelle 300 können auf den scheibenförmigen ersten und zweiten Blenden 156, 160' (auf jeweils einer der beiden Seiten der Scheibe) zusätzlich Aufsätze vorgesehen sein, analog zur zweiten Blende 160 wie in Figur 3 gezeigt.

In der Messzellen 200 und 300 können die Regeleinrichtung 168 sowie die Komponenten, die zur Ausbildung der Luftvorhänge benötigt werden (insbesondere die Blenden), auch weggelassen werden. Ebenfalls ist denkbar, die Pumpeinrichtung 142 wegzulassen; so könnte beispielsweise das zu untersuchende Fluid über den Fluideinlass 154 sowohl in die Messkammer eingespeist als auch aus dieser abgesaugt werden.

## Patentansprüche

1. Messzelle,
- mit einer Trägerstruktur, die eine Einrichtung zur Aufnahme einer Lichtquelle und eine Einrichtung zur Aufnahme eines Lichtsensors aufweist,
- mit einer Messkammer, in die ein zu untersuchendes Fluid einleitbar ist, und die ein Messkammergehäuse aufweist, wobei die Einrichtung zur Aufnahme der Lichtquelle ein erstes Ende des Messkammergehäuses, und die Einrichtung zur Aufnahme des Lichtsensors ein zweites Ende des Messkammergehäuses bilden, derart, dass ein von der Lichtquelle in die Messkammer ausgesandter Lichtstrahl auf den Lichtsensor trifft,
- mit einer an oder in der Trägerstruktur vorgesehenen Führung, entlang der sich ein Teil eines Messkammergehäuses relativ zu der Trägerstruktur bewegen kann, derart, dass im Falle einer thermischen Ausdehnung des beweglichen Teils des Messkammergehäuses eine Krafteinwirkung desselben auf die Trägerstruktur soweit wie möglich vermieden wird.

2. Messzelle nach Anspruch 1,
wobei im Falle einer thermischen Ausdehnung des beweglichen Teils des Messkammergehäuses die Krafteinwirkung desselben auf die Trägerstruktur vermieden oder so weit eingeschränkt wird, dass ein Abstand zwischen der Lichtquelle und dem Lichtsensor und eine relative Ausrichtung der Lichtquelle bezüglich des Lichtsensors während der thermischen Ausdehnung des beweglichen Teils des Messkammergehäuses konstant bleiben.

3. Messzelle nach Anspruch 1 oder 2,
wobei die Trägerstruktur wenigstens teilweise aus einem Material besteht, das einen geringen Wärmeausdehnungskoeffizienten aufweist.

4. Messzelle nach Anspruch 3,
wobei die Trägerstruktur wenigstens teilweise aus Kunststoff, beispielsweise CFK, oder Stahl, beispielsweise Invarstahl, besteht.

5. Messzelle nach einem der Ansprüche 1 bis 4,
wobei der bewegliche Teil des Messkammergehäuses über elastische Dichtungselemente mit der Trägerstruktur verbunden ist, derart, dass über die Dichtungselemente das Innere der Messkammer gegenüber der Umgebung der Messkammer abgedichtet wird.

6. Messzelle nach einem der Ansprüche 1 bis 5,
wobei der bewegliche Teil des Messkammergehäuses als Messrohr ausgestaltet ist.

7. Messzelle nach Anspruch 6,
wobei die Trägerstruktur ein Trägerrohr aufweist, wobei das Trägerrohr konzentrisch um das Messrohr herum angeordnet ist und die Einrichtung zur Aufnahme der Lichtquelle mit der Einrichtung zur Aufnahme der Lichtsensors verbindet.

8. Messzelle nach einem der Ansprüche 6 bis 7,
wobei die elastischen Dichtungselemente 0-förmige Ringe sind, die jeweils einen Teil der Außenfläche des Messrohrs umschließen.

9. Messzelle nach einem der Ansprüche 7 bis 8,
wobei zwischen dem Messrohr und dem Trägerrohr ein isolierendes Material vorgesehen ist.

10. Messzelle nach einem der Ansprüche 6 bis 9,
wobei die Trägerstruktur ein erstes Halteelement aufweist, das an einem ersten Ende des Trägerrohres vorgesehen ist, und das einen ersten Teil der Führung zum Führen des ersten Endes des Messrohres aufweist, und wobei die Trägerstruktur ein zweites Halteelement aufweist, das an einem zweiten Ende des Trägerrohres vorgesehen ist, und das einen zweiten Teil der Führung zum Führen zweiten Endes des Messrohres aufweist.

11. Messzelle nach Anspruch 10,
wobei im ersten Halteelement eine erste Aussparung ausgebildet ist, in der das erste Ende des Messrohres entlang einer Längsachse des Messrohres verschiebbar gelagert ist, und wobei im zweiten Halteelement eine zweite Aussparung ausgebildet ist, in der das zweite Ende des Messrohres entlang der Längsachse des Messrohres verschiebbar gelagert ist.

12. Messzelle nach einem der Ansprüche 10 bis 11,
wobei das erste Halteelement ein Ende mit einer zylinderförmigen Außenfläche aufweist, das in das erste Ende des Trägerrohres eingepasst ist, und wobei das zweite Halteelement ein Ende mit einer zylinderförmigen Außenfläche aufweist, das in das zweite Ende des Trägerrohres eingepasst ist.

13. Messzelle nach einem der Ansprüche 10 bis 12,
wobei die Einrichtung zur Aufnahme der Lichtquelle mit dem ersten Halteelement einstückig ausgebildet ist, und die Lichtquelle in der ersten Aussparung vorgesehen ist, derart, dass die Lichtquelle dem ersten Ende des Messrohres gegenüberliegt, und wobei die Einrichtung zur Aufnahme des Lichtsensors mit dem zweiten Halteelement einstückig ausgebildet ist, und der Lichtsensor in der zweiten Aussparung vorgesehen ist, derart, dass der Lichtsensor dem zweiten Ende des Messrohres gegenüberliegt.

14. Messzelle nach einem der Ansprüche 1 bis 13,
wobei das Messkammergehäuse beheizbar ist, und/oder
wobei die Messzelle eine Regeleinheit aufweist, mittels derer eine Abstrahlleistung der Lichtquelle so nachregelbar ist, dass eine Stärke eines Ausgangssignals des Lichtsensors bei Abwesenheit von Fluid in der Messkammer unabhängig vom Grad der Verschmutzung der Messkammer oder anderer Komponenten der Messzelle einem bestimmten Wert entspricht, und/oder
mit einem Auslass und einem Einlass auf, die beide in der Nähe des ersten Endes oder beide in der Nähe des zweiten Endes der Messkammer angeordnet sind, wobei der Auslass dem Zentrum der Messkammer näher ist als der Einlass,
- mit einer Pumpeinrichtung auf, mittels der Fluid über den Auslass aus der Messkammer absaugbar ist, und
- mit einer Filtereinrichtung, mittels der Partikel, die eine Verschmutzung der Messkammer beziehungsweise weiterer Komponenten der Messzelle bewirken können, aus dem durch die Pumpeinrichtung über den Auslass abgesaugten Fluid filterbar sind, um ein gefiltertes Fluid zu erhalten, wobei mittels der Pumpeinrichtung wenigstens ein Teil des gefilterten Fluids über den Einlass wieder in die Messkammer einspeisbar ist

15. Opazimeter,
mit einer Messzelle nach einem der Ansprüche 1 bis 16.
